(19) Europäisches Patentamt
European Patent Office
Office européen des brevets

(11) **EP 2 568 310 A2**

(12) **EUROPÄISCHE PATENTANMELDUNG**

(43) Veröffentlichungstag:
**13.03.2013 Patentblatt 2013/11**

(51) Int Cl.:
***G01S 5/16*** (2006.01)

(21) Anmeldenummer: **12176652.1**

(22) Anmeldetag: **17.07.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **12.09.2011 DE 102011082478**

(71) Anmelder: **Robert Bosch GmbH**
**70442 Stuttgart (DE)**

(72) Erfinder:
• **Sans Sangorrin, Jorge**
**70469 Stuttgart (DE)**
• **Mielenz, Holger**
**73760 Ostfildern (DE)**

(54) **Verfahren, System sowie Vorrichtung zur Lokalisation eines Fahrzeugs relativ zu einem vordefinierten Bezugssystem**

(57) Kerngedanke der vorliegenden Erfindung ist, mittels eines einfachen 2D-Videosystems eine relative Position zu vordefinierten, ortsfest angebrachten Markierungen innerhalb eines Bezugssystems zu erfassen und die Abbilder der Markierungen hinsichtlich Entfernung und Perspektive zu untersuchen. Somit kann bei Kenntnis der Position der Markierungen innerhalb des Bezugssystems eine Selbstlokalisation eines Fahrzeugs vergleichsweise kostengünstig und zuverlässig gewährleistet werden.

**Fig. 3**

EP 2 568 310 A2

**Beschreibung**

Stand der Technik

Die vorliegende Erfindung betrifft ein Verfahren zur Lokalisation eines Fahrzeugs relativ zu einem vordefinierten Bezugssystem. Insbesondere betrifft die vorliegende Erfindung ein Verfahren zur Selbstlokalisation von Fahrzeugen mit Hilfe eines Monovideosensors in manöverrelevanten Szenarien, wie z.B. Parkhäusern. Weiter wird ein System vorgeschlagen, mit welchem das erfindungsgemäße Verfahren in einem Fahrzeug durchgeführt werden kann, sowie eine Vorrichtung für den Einbau in einem Fahrzeug, um dieses Fahrzeug in einem erfindungsgemäßen System einzusetzen.

Im Zuge der Elektrifizierung des Individualverkehrs beschäftigen sich mehrere Entwicklungsgruppen und staatlich geförderte Projekte damit, autonomes Fahren für Fahrzeuge in vordefinierten Bezugssystemen, wie beispielsweise Parkplätzen, Parkhäusern und ähnlichen räumlich begrenzten Arealen zu ermöglichen. Kern eines autonomen Fahrmanövers ist stets ein Schritt der Lokalisation des Fahrzeugs relativ zu seiner Umgebung, um vordefinierte Zielpositionen anfahren zu können. Insbesondere das Anfahren von Ladestationen innerhalb eines Areals zum Parken von Fahrzeugen wird in Zukunft eine immer häufiger notwendige Prozedur sein. Ein Beispiel für ein öffentlich gefördertes Projekt (ögP) ist das EU-Förderprojekt "v-Charge", dessen Ziel die Entwicklung eines intelligenten Elektrofahrzeug-Systems ist, welches die Marktattraktivität von Elektrofahrzeugen steigern wird. Das in v-Charge zu entwickelnde System erlaubt Elektrofahrzeugen ein autonomes Fahren auf Parkplätzen, so dass der Fahrer beim Parken sein Fahrzeug an einer sogenannten "dropping zone" abgibt und anschließend dort wieder in Empfang nimmt. Zwischenzeitlich erhält das Fahrzeug über car2intrastructure-Kommunikationswege Informationen zu den möglichen Ladestellen und fährt diese an. Auf eventuelle Hindernisse auf dem Weg zu diesen Ladestellen reagiert das Fahrzeug autonom, indem auf die Umfeldinformation mitgeführter Sensoren reagiert wird. Den bekannten Konzepten ist dabei gemeinsam, dass die Navigation der Fahrzeuge zu einem wesentlichen Teil über die Infrastruktur des Parkareals durchgeführt wird, was ein hohes Maß an Abstimmung zwischen der lokalen Infrastruktur und der Fahrzeugsensorik bzw. Fahrzeugelektrik erforderlich macht. Es ist daher eine Aufgabe der vorliegenden Erfindung, eine Selbstlokalisation eines Fahrzeugs in einem vordefinierten Bezugssystem möglichst einfach und den dabei erforderlichen Integrations- und Abstimmungsaufwand gering zu halten. Es ist eine weitere Aufgabe der vorliegenden Erfindung, Hard- und Software-Aufwand seitens der Fahrzeuge gering zu halten und die Systemanteile der Infrastruktur für eine breite Masse an Fahrzeugen kompatibel zu gestalten.

Offenbarung der Erfindung

Das erfindungsgemäße Verfahren löst die vorstehend genannten Aufgaben durch eine Merkmalskombination gemäß Anspruch 1. Im Rahmen der vorliegenden Erfindung sei unter einer "Lokalisation" eines Fahrzeugs eine Ortsbestimmung zumindest dergestalt verstanden, dass ein sicheres (autonomes) Fortbewegen des Fahrzeugs innerhalb eines vordefinierten Bezugssystems gewährleistet werden kann. Der hierfür erforderliche Genauigkeitsgrad ist aus Platzgründen deutlich strenger anzulegen, als es derzeit über GPS-Ortung, welche lediglich eine Ortsbestimmung mit einer Toleranz von mehreren Metern ermöglicht, möglich ist. Ein weiteres Problem mit der GPS besteht darin, dass z.B. innerhalb von Gebäuden, Parkhäusern und Tiefgaragen mitunter kein Satellitensignal empfangen werden kann. Mit anderen Worten muss das Fahrzeug in üblichen Manöversituationen hinreichend genau hinsichtlich Position und Ausrichtung lokalisiert werden können, um Kollisionen und platzverschwendendes Rangieren und Parken zu verhindern. Unter einem "vordefinierten Bezugssystem" sei ein räumlich begrenzter Bereich verstanden, welcher für das autonome Fortbewegen und Rangieren im Sinne der vorliegenden Erfindung eingerichtet ist. Mit anderen Worten ist das Bezugssystem dergestalt vordefiniert, dass hinreichend viele und geeignet positionierte, vordefinierte, optisch erfassbare Markierungen vorgesehen sind, anhand welcher in dem Bezugssystem befindliche Fahrzeuge eine Selbstlokalisation mittels der vorliegenden Erfindung durchführen können. Ein Vorteil der vorliegenden Erfindung besteht darin, dass ein fahrzeugbasiertes Video-System, wie es mittlerweile bereits in Serie für Aufgaben der Verkehrszeichenerkennung, Fahrstreifen- und -spurerkennung oder Einparkassistenz eingesetzt wird, auch für das erfindungsgemäße Verfahren Verwendung finden kann. Hierzu weist das vordefinierte Bezugssystem mindestens eine vordefinierte, optisch erfassbare Markierung auf, welche beispielsweise eine Form bzw. ein Zeichen mit vorzugsweise hohem Kontrast umfassen kann, um eine optische Erkennung und gegebenenfalls Isolation von angrenzenden Umfeldobjekten mit vergleichsweise einfacher und kostengünstiger Hardware in Form eines 2D-Videosystems durchführen zu können. Um anhand der optisch erfassbaren Markierungen eine Selbstlokalisation zu ermöglichen, ist es notwendig, dass Position und Ausrichtung der vordefinierten Markierung relativ zum vordefinierten Bezugssystem bekannt sind. Indem das Verfahren eine Positionsermittlung eines Fahrzeugs in Relation zu einer vordefinierten Markierung gestattet, ergibt sich in Kenntnis der Position und Ausrichtung der vordefinierten Markierung zum Umfeld des Fahrzeugs eine Möglichkeit zur Bestimmung der Position des Fahrzeugs (z.B. unter Verwendung des Strahlensatzes). Zur Bestimmung der Position des Fahrzeugs gegenüber der vordefinierten Markierung wird die Markierung optisch erfasst und auf vordefinierte Charakteristika hin untersucht. Aus den Verzerrungen des jeweiligen Charakteristikums, welche sich aus der aktuellen Perspektive auf die Markierung ergeben, kann in Kenntnis einer unverzerrten Form des Charakteristikums auf den Betrachtungswinkel auf die Markierung geschlossen werden und anhand der Größe des Charakteristikums bzw. der vordefinierten Markierung im Sensorbild die Entfernung ermittelt werden.

Gemäß einem weiteren Aspekt der vorliegenden Erfindung wird ein System zur Lokalisation eines Fahrzeugs mit den Merkmalen gemäß Anspruch 2 vorgeschlagen. Das System umfasst eine mobile Einheit, welche dem Fahrzeug zugeordnet ist und mindestens eine stationäre Einheit, welche dem vordefinierten Bezugssystem zugeordnet ist. Die mobile Einheit umfasst mindestens ein fahrzeugbasiertes Videosystem, Speichermittel und eine Auswerteeinheit. In den Speichermitteln können Informationen über Größe und Form der vordefinierten Markierungen sowie der in ihnen enthaltenen optisch erfassbaren Charakteristika sowie Position und Ausrichtung der vordefinierten Markierungen innerhalb eines vordefinierten Bezugssystems gespeichert werden. Die Auswerteeinheit des Systems umfasst mindestens einen Prozessor, durch welchen Messdaten und im Speichermittel abgelegte Daten verarbeitet und anschließend wieder abgespeichert werden können. Darüber hinaus ist die Auswerteeinheit eingerichtet, die wie vorstehend beschriebenen Schritte des erfindungsgemäßen Verfahrens durchzuführen. Die stationäre Einheit des Systems umfasst mindestens eine vordefinierte, optisch erfassbare Markierung.

Gemäß einem weiteren Aspekt der vorliegenden Erfindung wird eine Vorrichtung zur Lokalisation eines Fahrzeugs zur Verfügung gestellt, welche ein fahrzeugbasiertes Videosystem, Speichermittel und eine Auswerteeinheit umfasst, wie sie vorstehend in Verbindung mit dem erfindungsgemäßen System beschrieben worden sind. Erfindungsgemäß ist die Vorrichtung eingerichtet, um als mobile Einheit in einem vorstehend beschriebenen System eingesetzt zu werden.

Die Unteransprüche zeigen bevorzugte Weiterbildungen der Erfindung.

Vorzugsweise umfassen das erfindungsgemäße System sowie die erfindungsgemäße Vorrichtung eine Sende-/Empfangseinheit zum Empfangen von Daten. Diese Daten können beispielsweise Informationen hinsichtlich eines optisch erfassbaren Charakteristikums einer vordefinierten Markierung enthalten und beispielsweise Aufschluss über Größe und Form sowie Proportionen, Farbe und Bedeutung der verschiedenen Charakteristika umfassen. Des Weiteren können die zu empfangenden Daten geometrische Charakteristika des vordefinierten Bezugssystems umfassen, mit anderen Worten also Informationen zur Topographie des vordefinierten Bezugssystems sowie den in ihm enthaltenen Fahrbahnbereichen, Parkpositionen, Hindernisse und andere statische Umstände. Zudem können auch Informationen enthalten sein, welche sich auf temporäre Eigenschaften des vordefinierten Bezugssystems beziehen. Insbesondere kann der Belegungszustand von Parkpositionen sowie gegebenenfalls vorübergehende Einschränkungen durch Wartungsarbeiten o.Ä. in den empfangenen Daten enthalten sein. Um die Selbstlokalisation des Fahrzeugs zu ermöglichen, können die zu empfangenden Daten Informationen über Position und Ausrichtung der in dem Bezugssystem enthaltenen vordefinierten Markierungen umfassen. Alternativ oder zusätzlich kann ein Datensatz enthalten sein, um eine anzufahrende Zielposition innerhalb des Bezugssystems zu ermitteln. Dies kann beispielsweise durch Angaben der Ebene, der Sektion sowie einer Nummer für eine konkrete Zielposition angegeben werden, alternativ können auch lediglich eine oder sämtliche freie Parkposition(en) enthalten sein und die Auswahl einer konkreten Zielposition dem Fahrzeug überlassen werden. Vorteilhafterweise kann die Information über mögliche Zielpositionen auch Abmaße der Zielposition enthalten, anhand welcher das Fahrzeug bzw. das erfindungsgemäße System selbst bestimmen kann, ob die vorgeschlagene Zielposition geeignet ist. Alternativ oder zusätzlich können die zu empfangenden Daten eine zu fahrende Trajektorie umfassen. Beispielsweise kann ein solcher Datensatz Informationen über die dabei zu passierenden vordefinierten Markierungen enthalten und optional oder alternativ die konkrete Geometrie der Trajektorie umfassen. Somit kann es dem Fahrzeug überlassen werden, im Zuge der Selbstlokalisation selbst für ein Einhalten der vorgegebenen Trajektorie zu sorgen und gegebenenfalls die Fahrtrichtung zu korrigieren. Indem das System oder die Vorrichtung eine Sende-/Empfangseinheit umfasst, kann sie somit über aktuelle Verhältnisse innerhalb des vordefinierten Bezugssystems informiert und für eine effektive Nutzung desselbigen eingerichtet werden.

Bevorzugt ist die Auswerteeinheit eingerichtet, eine Trajektorie selbst zu berechnen. Sofern das erfindungsgemäße System über die Position erfasster vordefinierter Markierungen informiert ist, kann das Fahrzeug sich selbst lokalisieren und bei Vorlage einer Fahraufgabe (beispielsweise Anfahren einer vorgegebenen Zielposition, Ausweichvorgang gegenüber einem Fahrzeug oder Fußgänger) eine geeignete Trajektorie bestimmen, um kollisionsfrei und effektiv das vordefinierte Bezugssystem zu durchfahren. Zudem ist es möglich, die Auswerteeinheit dafür einzurichten, einen Odometriefehler des Fahrzeugs hinsichtlich einer vordefinierten oder berechneten Trajektorie selbst zu berechnen und entsprechend zu korrigieren. Hierzu kann das System auch einen Odometriesensor umfassen, welcher im Fahrzeug verbaut ist und eingerichtet ist, der Auswerteeinheit Odometriedaten zur Verfügung zu stellen. Insbesondere kann nach einem notwendigen Ausweichmanöver (also ein Abweichen von einer vordefinierten Trajektorie) nach dem Passieren des Grundes für den Ausweichvorgang automatisch zur zuvor vordefinierten Trajektorie zurückgekehrt werden.

Gemäß einem weiteren Aspekt der vorliegenden Erfindung wird eine Parkeinrichtung, insbesondere ein Parkhaus vorgeschlagen, welches eine Sende-/Empfangseinheit zum Senden und Empfangen von Daten umfasst. Bei der Einfahrt in die Parkeinrichtung kann die Parkeinrichtung dem Fahrzeug einen Datensatz zusenden, anhand dessen das Fahrzeug bzw. die in ihm angeordnete Auswerteeinheit Informationen über optisch erfassbare Charakteristika der in der Parkeinrichtung vorhandenen vordefinierten Markierungen ableiten kann. Mit anderen Worten können Größe, Form, Farbe und gegebenenfalls spezifische Bedeutung einer jeden im vordefinierten Bezugssystem angebrachten vordefinierten Markierung anhand der Daten ermittelt werden. Alternativ oder zusätzlich können die Daten geometrische Charakteristika des vordefinierten Bezugssystems enthalten, mit anderen Worten also eine Art Lageplan oder Kartenmaterial darstellen, anhand welchem das Fahrzeug eine vordefinierte Fahraufgabe berechnen und/oder lösen kann. Weitere Inhalte der von der Parkeinrichtung an das Fahrzeug zu sendenden Daten können die Position und Ausrichtung der vordefinierten Markierungen relativ zum Bezugssystem, eine Zielposition des Fahrzeugs innerhalb des Bezugssystems und/oder eine zu fahrende Trajektorie sein. Mit anderen Worten ist die erfindungsgemäße Parkeinrichtung dafür ausgelegt, als stationäre Einheit in einem wie vorstehend beschriebenen System verwendet zu werden.

Vorzugsweise erfolgt die Erkennung der relativen Position des Fahrzeugs zu der vordefinierten Markierung mittels musterbasierter Erkennung. Die mittels eines Mono-Videosystems aufgenommenen Markierungen werden in einer Auswerteeinheit hinsichtlich Entfernung und Perspektive zum Mono-Videosystem im Aufnahmemoment ausgewertet. In diesem Verfahren kann über die Vorkenntnis charakteristischer Gestaltungsmerkmale der zu erkennenden Markierungen (Landmarken) und dem Wissen zur örtlichen Lage dieser Objekte im Bezugssystem eine Selbstlokalisation vorgenommen werden.

Weiter vorteilhaft kann das Verfahren, die Vorrichtung oder das System gemäß der vorliegenden Erfindung ein Mono-Videosystem verwenden, wie es beispielsweise bereits in Serie für die Erkennung von Verkehrszeichen oder Parkassistenz im Einsatz ist. Bei Verwendung eines Mono-Videosystems ist eine exakte Kenntnis der Geometrie der vordefinierten Markierungen bzw. der in ihnen enthaltenen optisch erfassbaren Charakteristika vorteilhaft. Aus Größe und Verzerrung der bekannten Geometrie innerhalb des Abbildes kann auf Entfernung und Azimut gegenüber der Markierung geschlossen werden. Eine Alternative zur Ermittlung der Position von aufgenommenen Punkten im vordefinierten Bezugssystem relativ zur Kamera besteht darin, ein Stereo-Videosystem zu verwenden, aus dessen ermittelten Daten eine Triangulation zur Positionsbestimmung durchgeführt werden kann.

Gemäß einem weiteren Aspekt der vorliegenden Erfindung wird ein Assistenzsystem zum automatisierten Parken eines Fahrzeugs und/oder Unterstützen eines Fahrers während der Bewegung des Fahrzeugs vorgeschlagen, wobei das Assistenzsystem eine Steuereinheit umfasst, welche eingerichtet ist, ein Fahrzeug zu beschleunigen, zu verzögern und zu lenken. Das Assistenzsystem ist somit in der Lage, Steuerbefehle zur Erfüllung vordefinierter Fahraufgaben zu geben. Erfindungsgemäß umfasst das Assistenzsystem weiter eine Vorrichtung, wie sie oben vorgestellt worden ist. Mit anderen Worten kann sich das erfindungsgemäße Assistenzsystem einer wie oben beschriebenen mobilen Einheit bedienen, um eine Selbstlokalisation durchzuführen.

Gemäß einem weiteren Aspekt der vorliegenden Erfindung wird ein Teilesatz vorgeschlagen, welcher mindestens eine vordefinierte Markierung zur Anbringung in einem Bezugssystem umfasst, um dieses Bezugssystem für die Verwendung mit einer erfindungsgemäßen Vorrichtung in einem erfindungsgemäßen System einzurichten, mit anderen Worten im Sinne der Erfindung "vorzudefinieren". Die Positionen der mindestens einen vordefinierten Markierung kann der Vorrichtung bei einer ersten Fahrt durch Bestätigung der Landmarken (beispielsweise an einem Touchscreen) beigebracht und die dabei gefahrene Trajektorie (sofern als geeignet erachtet) gespeichert werden. Somit ist es möglich, vorhandene Bezugssysteme auch für den Heimgebrauch erfindungsgemäß vorzudefinieren.

Die vorstehend beschriebenen Merkmale und Vorteile der vorliegenden Erfindung werden anhand der beigefügten Zeichnungsfiguren nachstehend detailliert erörtert.

Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:

Figur 1          ein Ablaufdiagramm, visualisierend die Schritte eines Ausführungsbeispiels des erfindungsgemäßen Verfahrens;

Figur 2a bis c   Ansichten eines Fahrzeugumfeldes mit jeweils einer vordefinierten Markierung;

Figur 3          eine Prinzipskizze zur quantitativen Ermittlung eines Abstandes einer Markierung von einem Videosystem;

Figur 4          eine perspektivische Darstellung einer Markierung;

Figur 5          eine Prinzipskizze einer Erfassung einer Markierung mittels eines Stereo-Videosystems;

Figur 6          einen Grundriss eines Bezugssystems gemäß der vorliegenden Erfindung;

Figur 7 eine schematische Übersicht über eine erfindungsgemäße Vorrichtung.

Ausführungsformen der Erfindung

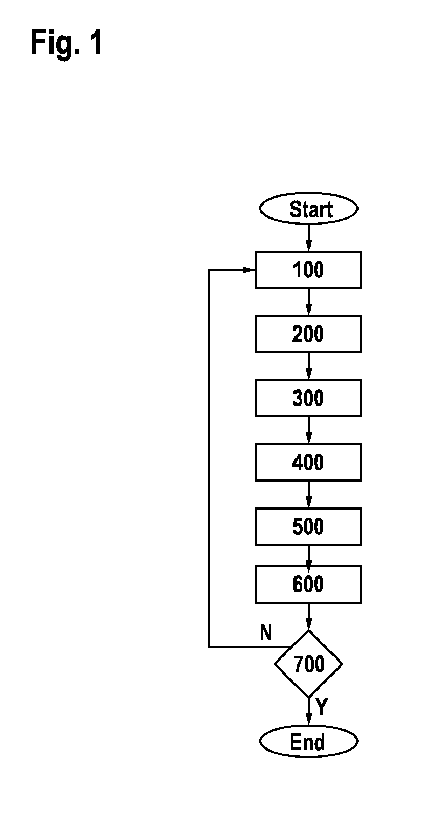

Figur 1 zeigt einen Ablaufplan, visualisierend die Schritte eines Ausführungsbeispiels des erfindungsgemäßen Verfahrens. Nach dem Starten des Verfahrens erfolgt in Schritt 100 eine Erfassung einer Markierung mittels des Videosystems. Im nachfolgenden Schritt 200 erfolgt ein Abgleich der aufgenommenen Videodaten mit im Speichermittel abgelegten Daten über vordefinierte Markierungen und ihre optisch erfassbaren Charakteristika. Mit anderen Worten wird ein Schritt durchgeführt, bei welchem die erfassten Videodaten daraufhin untersucht werden, ob und wenn ja, welche Markierung(en) in den Daten enthalten sind. Nachfolgend wird in Schritt 300 anhand der Größe und der Verzerrung der Abbildung einer erfolgreich identifizierten Markierung ermittelt, welche Position und Ausrichtung der Sensor im Aufnahmezeitpunkt zur Markierung gehabt haben muss. In Schritt 400 wird nachfolgend unter Zuhilfenahme von Information über die geometrischen Charakteristika des vordefinierten Bezugssystems eine relative Position und relative Ausrichtung des Fahrzeugs innerhalb des Bezugssystems ermittelt. Optional kann in diesem Schritt auch eine Abweichung der aktuellen Position des Fahrzeugs hinsichtlich einer vorgegebenen Trajektorie ermittelt werden. In Schritt 500 wird anhand einer vorgegebenen Zielposition und der in Schritt 400 ermittelten aktuellen Position und Ausrichtung des Fahrzeugs eine Trajektorie ermittelt, welche das Fahrzeug zu der vordefinierten Zielposition führt. Nachfolgend wird in Schritt 600 ein Fahrmanöver eingeleitet bzw. angepasst, um das Fahrzeug auf der Trajektorie in Richtung Zielposition zu bewegen bzw. das Fahrzeug zurück auf die vorgegebene Trajektorie zu bewegen. In Schritt 700 wird überprüft, ob das Fahrzeug seine Zielposition bereits erreicht hat. Sofern dies nicht der Fall ist (N), erfolgt in Schritt 100 erneut eine Erfassung der Umgebung bzw. einer dort angebrachten Markierung mittels Videosystems und der zuvor beschriebene Ablauf wird ein weiteres Mal abgearbeitet. Ist die Zielposition erreicht (Y), endet das erfindungsgemäße Verfahren.

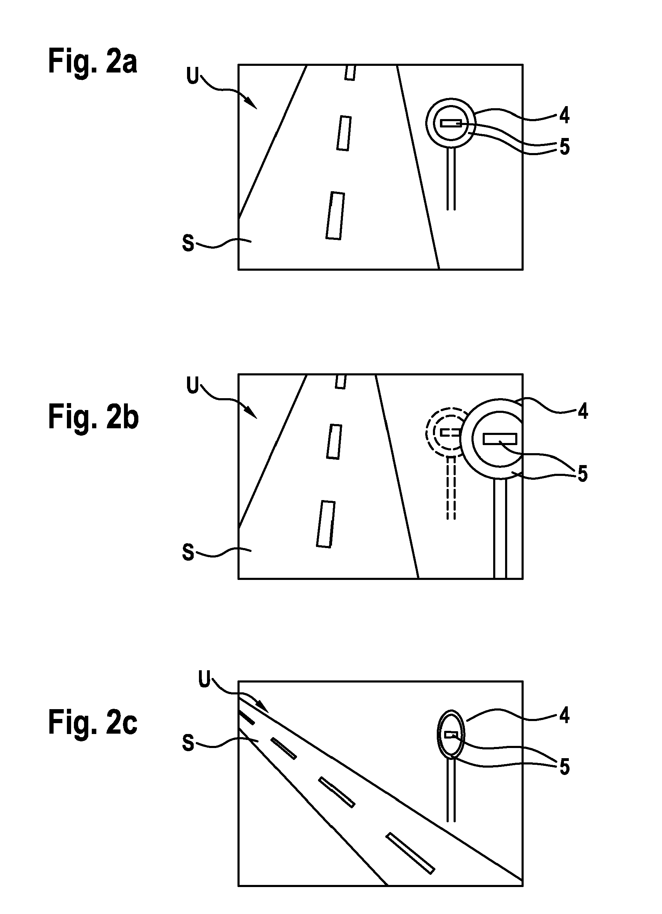

Figur 2a zeigt eine Ansicht eines Fahrzeugumfeldes U innerhalb eines Bezugssystems 2, wie es von einem Videosensor 3 erfasst werden könnte. Eine Fahrbahn S liegt geradeaus vor dem Fahrzeug und am rechten Rand der Fahrbahn S ist eine vordefinierte Markierung 4 angeordnet. Im Wesentlichen besteht die vordefinierte Markierung 4 aus einer runden Scheibe, deren äußeren Rand ein Kreisring ähnlich wie bei einem Verkehrszeichen säumt. Mittig trägt die Markierung 4 einen horizontalen Balken, der einen Abstand zum Kreisring aufweist. Beide Elemente der Markierung 4 können als optisch erfassbare Charakteristika im Zuge der Selbstlokalisation des Fahrzeugs Verwendung finden.

Figur 2b zeigt, dass die Markierung 4 größer und an einer anderen Position im Bild erscheint, wenn der Videosensor 3 zu einem späteren Zeitpunkt eine erneute Aufnahme von der Markierung 4 macht. Während die wiederkehrende Fahrbahnmarkierung (gestrichelte Mittellinie) selbst keine bzw. unzureichende Orientierung über einen Fahrtfortschritt gibt, lässt sich dieser aus der veränderten Abbildung der Markierung 4 bzw. der Charakteristika 5 zweifelsfrei und quantitativ bestimmen.

In Figur 2c ist die in Figuren 2a und 2b dargestellte Situation aus einer anderen Perspektive aufgenommen dargestellt. Die Markierung 4 ist aus einer anderen Perspektive aufgenommen worden, so dass der Kreisring, wie im Bild dargestellt, als Oval erscheint und die horizontale Erstreckung des horizontalen Balkens gegenüber der in Figur 2a dargestellten Abbildung verringert ist. Im Ergebnis kann aus der Größe eines Abbildes einer vordefinierten Markierung 4 auf einen Abstand des Videosensors zum Zeitpunkt der Aufnahme geschlossen werden und aus einer Verzerrung im Abbild einer vordefinierten Markierung 4 auf die Perspektive geschlossen werden, aus welcher die Markierung 4 optisch erfasst worden ist.

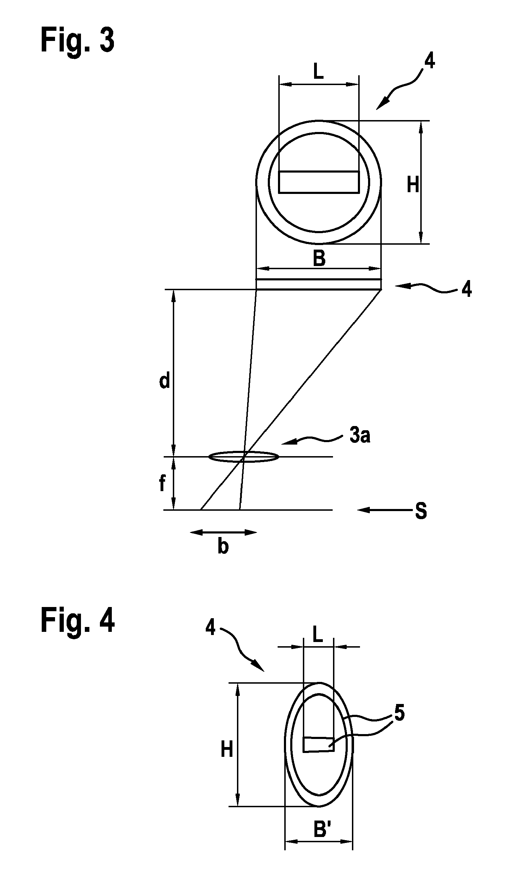

Figur 3 zeigt in ihrem oberen Bereich die Frontalansicht auf eine Markierung 4, wie sie in einem erfindungsgemäßen System Verwendung finden könnte. Unter der frontalen Ansicht ist eine Draufsicht auf eine Markierung 4 mit der Breite B in einem Abstand d von der Linse 3a eines Videosystems dargestellt. In der Sensorebene s weist das Abbild der Markierung 4 eine Breite b auf. Bei Kenntnis der Breite der Markierung 4 kann über die bekannte Kamera-Brennweite f und die ermittelbare Breite b im Bild der Markierung 4 anhand der folgenden Gleichung auf den Abstand der Markierung 4 von der Kameralinse 3a geschlossen werden:

$$d = f \cdot B/b$$

Wird die Markierung 4 aus einer anderen Perspektive (aus einem anderen Azimutalwinkel) aufgenommen, ergibt sich aufgrund trigonometrischer Überlegungen eine kleinere Breite b im Bild der Markierung. Sofern jedoch mittels analoger Überlegungen nicht die Breite B, sondern die Höhe H der Markierung, wie in Verbindung mit der Breite B oben beschrieben, ermittelt wird, so hat die Perspektive keinen Einfluss auf das Messergebnis. Folglich kann aufgrund der Höhe im Bild der Markierung auf eine Entfernung der Linse 3a von der Markierung geschlossen werden und aus der Breite b im Bild der Markierung 4 in Kenntnis des ermittelten Abstandes auf die Perspektive bei der Aufnahme der Markierung 4 geschlossen werden.

Figur 4 zeigt eine perspektivische Ansicht einer Markierung 4, wobei die Breite b' der Markierung 4 gegenüber der in Figur 3 gezeigten Breite B verringert ist.

Hingegen ist die Höhe H trotz Betrachtung aus einem anderen azimutalen Winkel identisch mit der in Figur 3 gezeigten Höhe H. Selbstverständlich kann zur Bestimmung eines azimutalen Winkels auch die Breite L des horizontalen Balkens der Markierung 4 verwendet werden. Der horizontale Balken dient überdies einer Möglichkeit zur Feststellung, ob sich das Fahrzeug gegenüber der Markierung in Schräglage befindet. Hierzu kann beispielsweise ermittelt werden, ob diejenigen Pixel des Sensors des Videosystems, welche die obere horizontale Kante des Balkens wiedergeben, alle in einer Reihe, d.h. in einer Ebene, liegen.

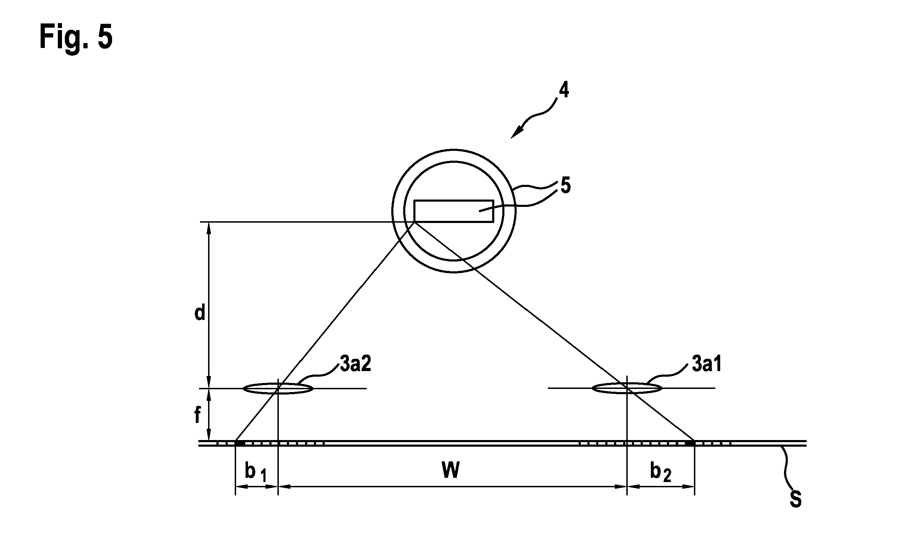

Figur 5 zeigt eine Anordnung zur stereoskopischen Ermittlung eines Abstandes des Videosystems bzw. des Fahrzeugs von einer Markierung 4. Hierzu werden anhand zweier in Basisweite W angeordneter Linsen 3a2 und 3a1 identische Punkte eines Charakteristikums 5 (im Bild die linke untere Ecke des horizontalen Balkens) daraufhin untersucht, an welchem Punkt des Sensors ihr Abbild erscheint. Es kann somit anhand grundsätzlich bekannter Gesetzmäßigkeiten der Optik auch ohne Kenntnis von quantitativen Charakteristika 5 der Markierung 4 auf eine Entfernung des Stereo-Videosystems von der Markierung 4 geschlossen werden.

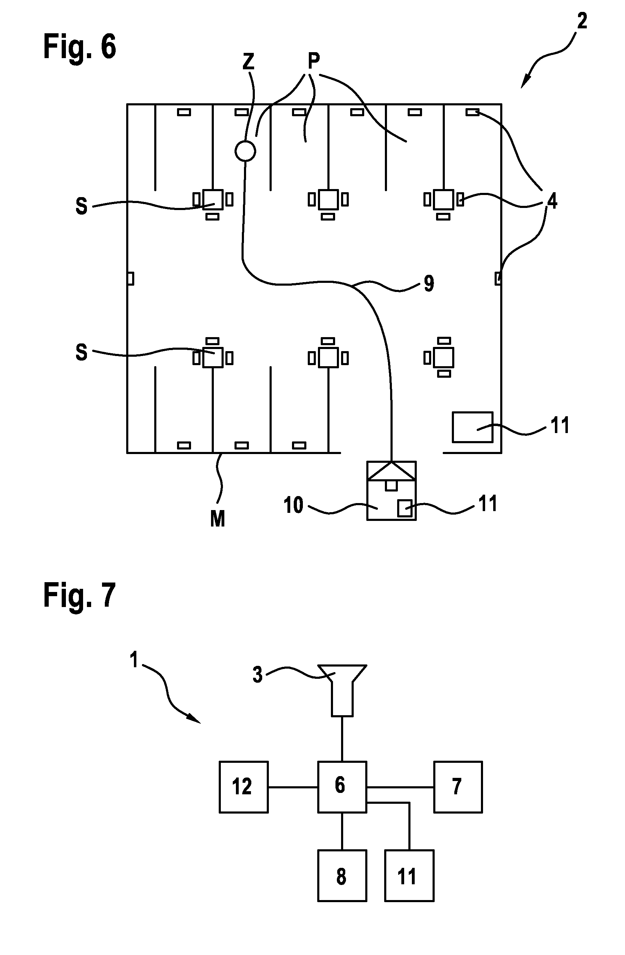

Figur 6 zeigt eine Draufsicht auf ein Parkdeck eines Parkhauses, welches Teil eines vordefinierten Bezugssystems 2 gemäß der vorliegenden Erfindung ist. An den Wänden M vordefinierter, möglicher Parkpositionen P sowie an Säulen S sind vordefinierte Markierungen 4 angebracht. Eine Sende-/Empfangseinheit 11 ist als Teil des Bezugssystems 2 vorgesehen, um einem Fahrzeug 10 einerseits die Positionen der vordefinierten Markierungen 4, andererseits die Geometrie des Parkdecks sowie eine Zielposition Z und/oder eine Trajektorie 9 zu übermitteln. Auch das Fahrzeug 10 enthält eine Sende-/Empfangseinheit 11 und ist somit imstande, sich gemäß dem erfindungsgemäßen Verfahren als Teil des erfindungsgemäßen Systems in der erfindungsgemäßen Parkeinrichtung selbst zu lokalisieren und eine Zielposition Z anzufahren.

Figur 7 zeigt eine Übersicht über die Komponenten einer erfindungsgemäßen Vorrichtung 1 in einem Fahrzeug. Ein Videosensor 3 ist mit einer Auswerteeinheit 6 verbunden. Weiter sind Speichermittel 8, eine Sende-/Empfangseinheit 11, ein Odometriesensor 12 sowie ein Betriebszustandsgeber 7 mit der Auswerteeinheit 6 verbunden.

Auch wenn die vorstehenden Erläuterungen anhand der beigefügten Zeichnungsfiguren ausführlich und detailliert beschrieben worden sind, bleibt der Bereich der vorliegenden Erfindung allein durch die beiliegenden Schutzansprüche definiert. Kerngedanke der vorliegenden Erfindung ist demnach, mittels einfacher 2D-Videosysteme 3 eine relative Position zu vordefinierten, ortsfest angebrachten Markierungen 4 innerhalb eines Bezugssystems 2 zu erfassen und die Abbilder der Markierungen 4 hinsichtlich Entfernung und Perspektive zu untersuchen. Somit kann bei Kenntnis der Position der Markierungen 4 innerhalb des Bezugssystems 2 eine Selbstlokalisation eines Fahrzeugs 10 vergleichsweise kostengünstig und zuverlässig durchgeführt werden.

## Patentansprüche

1. Verfahren zur Lokalisation eines Fahrzeugs (10) relativ zu einem vordefinierten Bezugssystem (2) unter Verwendung eines fahrzeugbasierten Video-Systems (3), wobei
   das vordefinierte Bezugssystem (2) mindestens eine vordefinierte, optisch erfassbare Markierung (4) aufweist,
   mindestens ein optisch erfassbares Charakteristikum (5) der mindestens einen vordefinierten Markierung (4) bekannt ist,
   die Position und die Ausrichtung der mindestens einen vordefinierten Markierung (4) relativ zum vordefinierten Bezugssystem (2) bekannt sind,
   die mindestens eine vordefinierte Markierung (4) mittels des fahrzeugbasierten Video-Systems (3) erfasst wird, und
   die relative Position des Fahrzeugs (10) zu der Markierung (4) aus Daten, welche aus der optischen Erfassung der Markierung (4) erhalten werden, ermittelt wird.

2. System zur Lokalisation eines Fahrzeugs (10) relativ zu einem vordefinierten Bezugssystem (2) mit einer mobilen Einheit und mindestens einer stationären Einheit, wobei die mobile Einheit umfasst:

   - ein fahrzeugbasiertes Video-System (3);
   - Speichermittel (8);
   - eine Auswerteeinheit (6); und wobei
   die mindestens eine stationäre Einheit mindestens eine vordefinierte, optisch erfassbare Markierung (4) aufweist, und
   Position und Ausrichtung der mindestens einen vordefinierten Markierung (4) relativ zum vordefinierten Bezugssystem (2) in den Speichermitteln (8) der mobilen Einheit ablegbar sind; wobei die mobile Einheit eingerichtet ist,
   mittels des fahrzeugbasierten Video-Systems (3) mindestens ein optisch erfassbares Charakteristikum (5) der mindestens einen vordefinierten Markierung (4) zu erfassen, und
   mittels der Auswerteeinheit (6) die relative Position des Fahrzeugs (10) zu der Markierung (4) zu ermitteln, wobei die Auswerteeinheit (6) eingerichtet ist, Daten über das optisch erfassbare Charakteristikum (5) aus den Speichermitteln (8) zu vergleichen mit Daten, welche aus der optischen Erfassung der Markierung (4) erhalten werden.

3. Vorrichtung zur Lokalisation eines Fahrzeugs (10) relativ zu einem vordefinierten Bezugssystem (2) umfassend:

    - ein fahrzeugbasiertes Video-System (3);
    - Speichermittel (8);
    - eine Auswerteeinheit (8); wobei
die Vorrichtung eingerichtet ist, als mobile Einheit in einem System nach Anspruch 2 verwendet zu werden.

4. System nach Anspruch 2 oder Vorrichtung nach Anspruch 3, weiter umfassend eine Sende-/Empfangseinheit (11) zum Empfangen von Daten repräsentierend

    - ein optisch erfassbares Charakteristikum (5) einer vordefinierten Markierung (4) und/oder
    - geometrische Charakteristika des vordefinierten Bezugssystems (2), und/oder
    - die Position und Ausrichtung einer vordefinierten Markierung (4) relativ zum Bezugssystem (2), und/oder
    - eine Zielposition (Z) des Fahrzeugs (10) innerhalb des Bezugssystems (10), und/oder
    - eine zu fahrende Trajektorie (9).

5. System nach Anspruch 2 oder 4 oder Vorrichtung nach Anspruch 3 oder 4, wobei die Auswerteeinheit (6) eingerichtet ist,

    - eine Trajektorie (9) selbst zu berechnen, und/oder
    - einen Odometriefehler des Fahrzeugs (10) hinsichtlich einer vordefinierten Trajektorie (9) selbst zu berechnen und zu korrigieren.

6. System nach einem der Ansprüche 2, 4 oder 5 oder Parkeinrichtung, insbesondere Parkhaus, umfassend

    - eine Sende-/Empfangseinheit (11) zum Empfangen von Daten repräsentierend
    - ein optisch erfassbares Charakteristikum (5) einer vordefinierten Markierung (4) und/oder
    - geometrische Charakteristika des vordefinierten Bezugssystems (2), und/oder
    - die Position und Ausrichtung mindestens einer vordefinierten Markierung (4) relativ zum Bezugssystems (2), und/oder
    - eine Zielposition (Z) des Fahrzeugs (10) innerhalb des Bezugssystems (2), und/oder
    - eine zu fahrende Trajektorie (9); und wobei die Parkeinrichtung (P) weiter mindestens eine vordefinierte Markierung (4) mit einem vordefinierten optisch erfassbaren Charakteristikum (5) umfasst, wobei die vordefinierte Markierung (4) eingerichtet ist, als stationäre Einheit in einem System nach Anspruch 2, 4 oder 5 verwendet zu werden.

7. Verfahren nach Anspruch 1, System nach Anspruch 2, 4, 5 oder 6 oder Vorrichtung nach Anspruch 3, 4 oder 5, wobei die Erkennung der relativen Position des Fahrzeugs (10) zu der Markierung (4) mittels musterbasierter Erkennung durchgeführt wird.

8. Verfahren nach Anspruch 1 oder 7, Vorrichtung nach Anspruch 3 bis 5 oder 7 oder System nach Anspruch 2, 4, 5, 6 oder 7, wobei das Video-System (3) ein Mono-Video-System umfasst, insbesondere ein Mono-Video-System ist oder ein Stereo-Video-System umfasst, insbesondere ein Stereo-Video-System ist.

9. Assistenzsystem zum automatisierten Parken eines Fahrzeugs (10) und/oder Unterstützen eines Fahrers während der Bewegung des Fahrzeugs (10), wobei das Assistenzsystem umfasst:

    eine Steuereinheit welche eingerichtet ist, ein Fahrzeug (10) zu

        - Beschleunigen bzw.
        - Verzögern und
        - Lenken;

    wobei das Assistenzsystem weiter eine Vorrichtung nach einem der vorstehenden Ansprüche 3 bis 5, 7 oder 8 umfasst bzw. verwendet.

# Fig. 1

**Fig. 2a**

**Fig. 2b**

**Fig. 2c**

# Fig. 3

L

4

H

B

4

d

3a

f

S

b

# Fig. 4

4

L

5

H

B'

## Fig. 5

# Fig. 6

# Fig. 7